# EUROPÄISCHE PATENTSCHRIFT

(11) **EP 2 692 015 B1**
(45) Veröffentlichungstag und Bekanntmachung des Hinweises auf die Patenterteilung: **18.02.2015**
(21) Anmeldenummer: 12710131.9
(22) Anmeldetag: 29.02.2012
(51) Int. Cl.: H01Q 1/12, H01Q 1/24, H01Q 1/22

(54) **STRAHLFORM-STEUERUNGSEINRICHTUNG FÜR EINE ANTENNE SOWIE ZUGEHÖRIGE ANTENNE**
BEAM SHAPE CONTROL DEVICE FOR AN ANTENNA AND ASSOCIATED ANTENNA
DISPOSITIF DE COMMANDE DU FORMAGE DU FAISCEAU POUR UNE ANTENNE, AINSI QU'ANTENNE CORRESPONDANTE

(30) Priorität: 30.03.2011 DE 102011015572
(43) Veröffentlichungstag der Anmeldung: 05.02.2014
(73) Patentinhaber: Kathrein-Werke KG, 83022 Rosenheim (DE)
(72) Erfinder: PRASSBERGER, Klaus, 83233 Bernau (DE); BIEN, Benjamin, 83022 Rosenheim (DE); MOHR, Markus, 83022 Rosenheim (DE)
(74) Vertreter: Flach, Dieter Rolf Paul
(86) Internationale Anmeldenummer: PCT/EP2012/000874
(87) Internationale Veröffentlichungsnummer: WO 2012/130366

(56) Entgegenhaltungen:
- EP-B1- 1 067 626
- WO-A1-02/05383
- WO-A2-02/061877
- US-A1- 2004 152 492
- US-A1- 2007 229 378

## Beschreibung

Die Erfindung betrifft eine Antenne und insbesondere eine Mobilfunk-Antenne mit einer Strahlformeinrichtung nach dem Oberbegriff des Anspruches 1.

Antennen, insbesondere Mobilfunk-Antennen mit einer Strahlformeinrichtung werden insbesondere in der Mobilfunktechnik eingesetzt, d.h. bei Mobilfunkbasisstationen, um die Hauptkeule einer Mobilfunkantenne bezüglich ihres Abstrahlwinkels unterschiedlich einzustellen. In Abhängigkeit des Absenkwinkels (der üblicherweise auch "Down Tilt" genannt wird) kann eine betreffende Mobilfunkzelle unterschiedlich groß ausgeleuchtet und damit eingestellt werden.

Bei derartigen Strahlformeinrichtungen, d.h. bei derartigen Strahlform-Steuerungseinrichtungen wird üblicherweise von einer RET-Einheit gesprochen, d.h. einer sogenannten "remote electrical tilt"-Einrichtung, wie sie beispielsweise aus der WO 02/061877 A2 bekannt ist. Mittels einer Strahlformeinrichtung, die nachfolgend vor allem auch als Strahlform-Steuerungseinrichtung oder Strahlform-Gerät bezeichnet wird (da die entsprechenden Einrichtungen der Geräte nicht selbst die Strahlformung bewirken sondern nur steuern, da die Strahlformung dann von den für die Strahlung aktiven und/oder passiven Elemente bewirkt wird) kann aber nicht nur (beispielsweise durch unterschiedliche Einstellungen von Phasenschiebern) ein unterschiedlicher Down-Tilt-Winkel in Elevationsrichtung eingestellt werden, sondern es kann auch insbesondere bei einem Antennenarray mit mehreren Spalten (beispielsweise unter Verwendung von Phasenschiebern) die Hauptstrahlrichtung und damit die Hauptquelle einer Antennenanlage in Horizontalrichtung, also mit unterschiedlichem Azimutwinkel, eingestellt werden. Schließlich kann mittels einer Strahlformeinrichtung nicht nur eine unterschiedliche Ausrichtung der Hauptstrahlrichtung einer Antennenanlage in Elevationsrichtung und/oder in Azimutrichtung eingestellt werden, sondern es kann auch die Strahlbreite sowohl in Azimut- wie in Elevationsrichtung unterschiedlich eingestellt werden, um also hier die Halbwertsbreite einer Hauptstrahlkeule unterschiedlich einstellen zu können (half power beam width). Ebenso ist es auch möglich, Einstellungen für die mechanischen Winkel einer Antenne, nämlich Roll, Nick und Gier ("roll", "pitch", "yaw") vorzunehmen.

Mit anderen Worten sind die vorbekannten Antennen in der Regel so ausgeführt, dass an einer dafür vorgesehenen mechanischen Schnittstelle (beispielsweise am unteren Montageflansch des Antennengehäuses) die sogenannte RET-Einheit installiert werden kann, die neben einer Elektronik auch einen Motor umfasst, welcher über eine mechanische Umsetzung die in der Antenne integrierten Phasenschieber ansteuert. Die somit erreichte Phasenänderung wirkt sich direkt auf die Strahlcharakteristik, z.B. auf den Down-Tilt-Winkel, der Antenne aus.

Mittels derartiger RET-Einheiten kann grundsätzlich die Strahlcharakteristik von Multi-Antennenanlagen unterschiedlich eingestellt werden, wobei die erwähnten RET-Motoren zur Einstellung der Hauptstrahlrichtung der Antenne nicht nur in Vertikalrichtung (also in Elevationsrichtung zur Einstellung eines unterschiedlichen Down-Tilt-Winkels), sondern auch in Horizontalrichtung (also in Azimutrichtung) wie aber auch zur Einstellung der Halbwertsbreite einer Hauptkeule verwendet werden können.

Dabei ist es grundsätzlich bekannt, dass die Steuerungs-einheit, also die betreffende Strahlform-Steuerungseinrichtung oder das so genannte Strahlform-Steuerungsgerät (also die so genannte RET-Einheit)mit dem zugehörigen Motor innerhalb der Antennenanordnung, d.h. also innerhalb des Radoms, angeordnet werden kann. Gemäß der WO 02/061877 A2 ist demgegenüber vorgeschlagen worden, eine derartige RET-Einheit außerhalb des Radoms, bevorzugt direkt unterhalb eines Montageflansches der Antennenordnung anzubauen, was den Vorteil aufweist, dass eine derartige RET-Einheit auch ohne Öffnen der Antennenabdeckung (Radom) nachgerüstet werden kann.

Unabhängig davon ist es stets erforderlich, eine entsprechende Abstimmung zwischen einer RET- bzw. einer Multi-RET-Einheit und einer zugehörigen Antenne vorzunehmen, die über die Multi-Strahlformeinrichtung entsprechend bezüglich der Strahlformung angesteuert werden soll.

Nach dem aktuellen Stand der Technik müssen dabei die Multi-Strahlform-Stuerungseinrichtung (Multi-RET) und die antennenspezifischen Konfigurations-Daten und -Werte ("configuration-data-Werte") wie aber auch die zusätzlich erforderlichen Daten und Werte ("additional-data-Werte") mittels einer sog. "Primary" über ein standartisiertes Protokoll wie zum Beispiel dem AISG 1.1 oder 3GPP-Protokoll zur Multi-Strahlformeinrichtung gesendet werden. Hierzu ist es notwendig, dass zum Beispiel ein Installateur des Multi-Strahlform-Systems diese antennenspezifischen Daten aus einer Datenbank oder aus einer anderen Daten-Struktur richtig auswählt, um diese dann anschließend der Multi-Strahlformeinrichtung mitzuteilen. Es muss also eine richtige Zuordnung zwischen der Multi-Strahlformeinrichtung und dem Antennentyp durchgeführt werden, an welche die Multi-Strahlformeinrichtung montiert werden soll bzw. bereits montiert worden ist.

Schließlich wird auch noch beispielsweise auf die 3GPP-Spezifikationen wie aber auch auf die vollständige AISG 1.1-Spezifikation verwiesen, in der u.a. der Begriff "Primary Station" verwendet wird. Bei einem so genannten "Primary", also einer so genannten "Primary Station" handelt es sich also bekanntermaßen um die Basisstation und vor allem um eine so genannte Master-Steuerungs-Einheit (Master Controll Unit) in der Basisstation.

Gemäß der Vorveröffentlichung DE 600 28 466 T2 (entspricht der EP 1 067 626 B1) ist ein Antennensystem mit einer Fernsteuerung der Antennenkeulenneigung als bekannt zu entnehmen, wobei für das der Antenne zugeordnete Antennensteuergerät ein Speicher vorgesehen ist. In dem Speicher sind gleichfalls antennenspezifische Daten gespeichert, wie die Antennenadresse oder die Abwärtsneigeposition. Die US 2004/0152492 A1 beschreibt ein Antennen-Schnittstellenprotokoll. Jeder Antenne der Basisstation ist dabei ein Tag zugeordnet, der zumindest die Nummer der Antenne aufweist.

Ferner beschreibt die US 5,546,090 A ein RFID-Tag, das im Zusammenhang mit der Kalibrierung eines Antennen-Arrays verwendet wird.

Schließlich ist aus der US 2007/0229378 A1 ein Telekommunikationssystem für eine Antenne als bekannt zu entnehmen, bei welchem Maßnahmen vorgesehen sind, um die geographische Position, beispielsweise den Elevationswinkel einer Antenneneinrichtung und/oder den Azimutwinkel der Antenne zu bestimmen. Ferner ist für den Betrieb der Antenne wichtig zu wissen, welche Komponenten in der Antenne vorgesehen sind. Die entsprechenden antennenspezifischen Komponenten können beispielsweise mittels eines Bar-Codes an der Antenne festgehalten werden, die es einem Techniker erlaubt bei der Installation der Antenne diesen Bar-Code zu scannen (beispielsweise mittels eines mobilen Scanners), um dann diese Informationen in ein Datensystem einzuspeisen und die dort abgespeicherten weiteren Daten auszulesen, die zum Betrieb der Antenne benötigt werden.

Die vorstehend genannte Vorveröffentlichung beschreibt insoweit auch, dass die antennenspezfischen Komponenten der Antennen-Installation auch auf einem RFID-Chip abgelegt sein können. Diese Daten können dann ausgelesen werden, um die Antenne und die in der Antenne vorgesehenen Komponenten zu erfassen. Mit einem derartigen System können also über den erwähnten RFID-Chip die Seriennummer einer zugewiesenen Antenne ausgelesen und die entsprechenden Daten bezüglich der installierten Antennen-Komponenten erfasst werden.

Aufgabe der vorliegenden Erfindung ist es von daher, eine verbesserte Antenne und insbesondere eine verbesserte Mobilfunk-Antenne mit einer Strahlformeinrichtung bzw. Multi-Strahlformeinrichtung zu schaffen.

Die Aufgabe wird bezüglich der im Anspruch 1 angegebenen Merkmalen gelöst. Vorteilhafte Ausgestaltungen der Erfindung sind in den Unteransprüchen angegeben.

Die erfindungsgemäße Lösung weist gegenüber herkömmlichen Antennen und Mobilfunk-Antennen mit bisher zum Einsatz gelangten Strahlform- und insbesondere Multi-Strahlformeinrichtungen, die nachfolgend kurz als RET bzw. Multi-RET bezeichnet werden, deutliche Vorteile auf.

Die Erfindung erlaubt es also über das RFID-Lesegerät mit der zugehörigen RFID-Empfangsantenne nicht nur die entsprechenden Identifikations-Daten zur richtigen Zuordnung der verwendeten Antenne auszulesen, sondern vor allem die für den Betrieb der Antenne benötigten Konfigurationsdaten und/oder Betriebsdaten. Ferner ist es möglich, dass entsprechende Daten, die während des Betriebes erfasst werden, auch umgekehrt auf dem RFID-Tag abgespeichert werden können. Dies bietet auch den wesentlichen Vorteil, dass beispielsweise bei einer nachrüstbaren oder im Falle einer Störung bei einer austauschbaren RET-Einheit die entsprechenden antennenspezifischen Konfigurations- und/oder Betriebsdaten wiederum neu ausgelesen und der Betrieb der Antenne sofort weiter aufgenommen und durchgeführt werden kann.

Im Rahmen der Erfindung ist es nämlich nunmehr möglich, sowohl antennentyp-spezifische wie aber auch frequenzband-spezifische Daten bezüglich eines Antennensystems, insbesondere im Falle einer Mobilfunk-Basisstation, dauerhaft in einem an oder in der Antenne bzw. Antenneneinrichtung vorgesehenen und/oder untergebrachten bzw. montierten Speicher abzuspeichern. Dabei wird als entsprechende Speichereinrichtung im Rahmen der Erfindung ein RFID-Datenträger verwendet, der an der Antenne positioniert werden kann, beispielsweise außerhalb oder innerhalb, und der zum Beispiel über eine Öffnung im Antennengehäuse an- oder eingesteckt oder mittels einer sonstigen Befestigungseinrichtung befestigt werden kann.

Im Rahmen der Erfindung wird schließlich auch eine Single-Strahlform- oder Multi-Strahlformeinrichtung vorgeschlagen, die mit einer integrierten Lese- und/oder Schreibelektronik versehen ist, und zwar einschließlich einer Empfangs- und Sendeantenne. Diese nachfolgend kurz auch als RET bzw. Multi-RET-Einheit bezeichnete Strahlform- und insbesondere Multi-Strahlformeinrichtung kann nunmehr außerhalb der Antenne bzw. des Antennengehäuses, wie beispielsweise in der WO 02/061 877 A2 beschrieben, oder innerhalb des Antennengehäuses oder über eine Einführöffnung teilweise oder ganz in einer in das Innere des Antennengehäuses hineinragenden Position montiert werden, und zwar bevorzugt so, dass die in der RET-Einheit vorgesehene Empfangs- und Sendeantenne so zu liegen kommt, dass ein in oder an der Antenne vorgesehener RFID-Speicher mit den entsprechenden Informationen ausgelesen werden kann.

Bevorzugt kann dabei eine uni- wie aber auch eine bi-direktionale Kommunikation zwischen der RET-Einheit und dem an oder in der Antenne angebrachten RFID-Speicher, der kurz als RFID-Tag bezeichnet wird, ermöglicht werden.

Die entsprechenden Daten der Antenne bzw. des Antennentyps oder des umgesetzten Frequenzbandes sind dabei bevorzugt dauerhaft (persistent) auf dem RFID-Tag abgespeichert.

Da die antennenspezifischen Konfigurations-Daten und -Werte eindeutig und bevorzugt dauerhaft abgespeichert sind, können diese Daten und Werte auch bei einem nachträglichen Anbau oder beim Auswechseln und Neuanbau einer RET-Einheit wieder Antennen-spezifisch richtig ausgelesen und weiterverarbeitet werden. Zudem können auch die einzelnen Frequenzbänder den einzelnen RET-Sub-Einheiten eindeutig zugeordnet werden, da nämlich die Multi-RET-Einheit aus mehreren Sub-Einheiten besteht, nämlich sogenannten virtuellen RET-Einheiten.

Darüber hinaus können auf dem RFID-Tag aber auch andere Daten mit abgespeichert werden, nämlich Daten bezüglich der Betriebsparameter wie Downtilt-Einstellwerte, Extremtemperaturen, Verstellzyklen, Beschleunigungen etc. Das RFID-Tag kann somit als Logbuch der Antenne fungieren und bei Bedarf ausgelesen werden. Dies bietet besonders große Vorteile dann, wenn beispielsweise eine RET-Einheit ersetzt werden muss, da dann die neue Multi-RET-Einheit alle gespeicherten Betriebsparameter auslesen kann, und zwar eindeutig bezüglich derjenigen Antenne, an der die RET-Einheit montiert wird. Die Zuordnung von falschen Daten oder das Verwechseln von Daten ist damit ausgeschlossen.

Die Erfindung wird nachfolgend anhand von schematischen Ausführungsbeispielen näher erläutert. Dabei zeigen im Einzelnen:
- Figur 1a:: ein erstes erfindungsgemäßes Ausführungsbeispiel mit einer Strahlform-Steuerungseinrichtung vor dem Anbau an einer Antenneneinrichtung, die mit einem außerhalb der Antenneneinrichtung vorgesehenen RFID-Tag versehen ist;
- Figur 1b:: die entsprechende Darstellung zu Figur 1a im angebauten Zustand der Strahlform-Steuerungseinrichtung;
- Figur 2a:: ein zu Figur 1a leicht abgewandeltes Ausführungsbeispiel mit einer Strahlform-Steuerungseinrichtung, bei der die integrierte Empfangs- und Sendeantenne an anderer Stelle im Gehäuse untergebracht ist;
- Figur 2b:: eine entsprechende Darstellung zu dem Ausführungsbeispiel gemäß Figur 2a im verbauten Zustand der Strahlform-Steuerungseinrichtung, wobei das RFID-Tag sich hier außerhalb der Strahlformeinrichtung befindet;
- Figur 3a:: eine Abwandlung zu den vorausgegangenen Ausführungsbeispielen, bei welcher das RFID-Tag innerhalb des Antennengehäuses untergebracht ist und zwar vor dem Anbau der Strahlform-Steuerungseinrichtung;
- Figur 3b:: eine Darstellung zu Figur 3a nach dem Anbau der Strahlform-Steuerungseinrichtung an das Antennengehäuse;
- Figur 4a:: eine weitere Abwandlung zu den Ausführungsbeispielen gemäß den Figuren 1a, 2a und 3a vor dem Anbau;
- Figur 4b:: eine entsprechende Darstellung zu Figur 4a nach dem Einbau der Strahlform-Steuerungseinrichtung in der Antenne;
- Figur 5a:: eine nochmalige Abwandlung zu den vorausgegangenen Ausführungsbeispielen vor dem Einbau in der Strahlform-Steuerungseinrichtung in dem Antennengehäuse; und
- Figur 5b:: eine entsprechende Darstellung zu Figur 5a nachdem die Strahlform-Steuerungseinrichtung in der Antenne, das heißt im Antennengehäuse, eingesetzt ist.

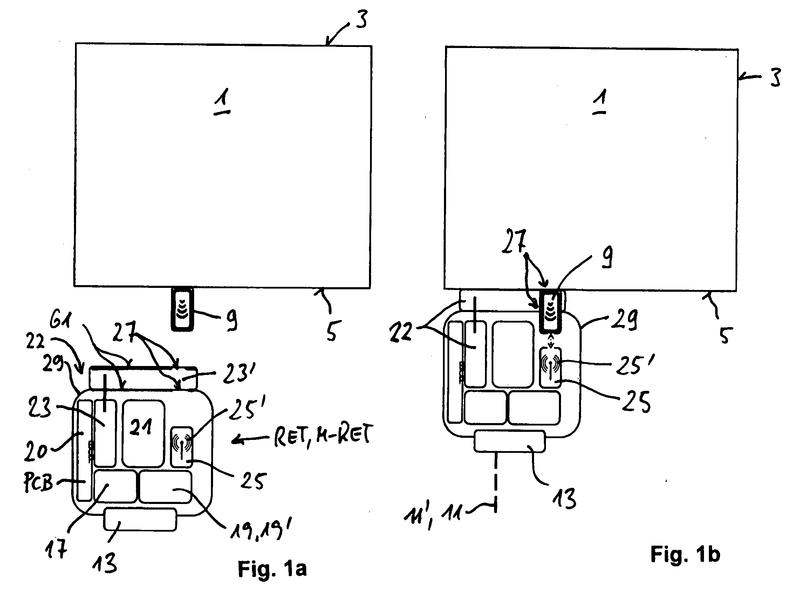

In Figur 1 ist in schematischer Darstellung eine Antenne 1 und insbesondere eine Mobilfunkantenne 1 gezeigt, wobei das Antennengehäuse oder Radom 3 nur schematisch angedeutet ist. Im Inneren des Antennengehäuses 3 sind in der Regel eine Vielzahl von Strahlern und Strahlereinrichtungen vorgesehen, die beispielsweise auch in mehreren Spalten nebeneinander angeordnet und auch in Azimutrichtung unterschiedlich ausgerichtet sein können.

Die in der Regel mehreren Strahlereinrichtungen (Antennen) sind dabei üblicherweise in Vertikalrichtung oder wegen der Komponente in Vertikalrichtung übereinander in einzelnen Spalten vor einem Reflektor montiert. Die Strahlereinrichtungen können dabei senden und empfangen, insbesondere in verschiedenen Frequenzbändern. In der Regel werden dabei nicht nur einfach, sondern auch dualpolarisierte Strahler verwendet, die bevorzugt nach Art einer X-Polarisation ausgerichtet sind, bei denen also die einzelnen Polarisationsebenen in einem Winkel von +45° bzw. -45° zur Vertikalen bzw. Horizontalen ausgerichtet sind. Es wird insoweit nur beispielhaft auf die diversen Vorveröffentlichungen derartiger Antennentypen verwiesen, wie sie allesamt vor allem im Mobilfunkbereich für Basisstationen eingesetzt werden bzw. eingesetzt werden können.

Bei einem Ausführungsbeispiel gemäß Figur 1a ist an einem an der Gehäuseabdeckung 3 in der Regel an der Unterseite vorgesehenen Montageflansch 5 neben anderen Schnittstellen eine Schnittstelle oder eine Anschlussmöglichkeit oder zumindest nur eine mechanische Befestigungsmöglichkeit vorgesehen, um dort einen Speicher 9 in Form eines RFID-Tags anzustecken oder zu positionieren.

Daneben ist in Figur 1a vor der Montage an der Antenne 1 noch eine Strahlformeinrichtung RET insbesondere in Form einer Multi-Strahlformeinrichtung M-RET gezeigt, die nachfolgend kurz auch als RET- bzw. Multi-RET-Einheit oder kurz RET bzw. Multi-RET bezeichnet wird. Da es sich dabei also um die Strahlformung steuernde, d.h. veränderbare Steuerungs- und/oder Einstelleinrichtungen, -Geräte oder allgemein -Vorrichtungen handelt, werden diese Strahlformeinrichtungen oder Multi-Strahlformeinrichtungen nachfolgend auch als Strahlform-Steuerungseinrichtung oder Strahlform-Steuerungsgerät bzw. Multi-Strahlform-Gerät bezeichnet.

Diese Multi-Strahlform-Steuerungseinrichtung M-RET umfasst eine Kommunikationsschnittstelle 13, über die ein Kommunikationsbus 11 beispielsweise in Form eines entsprechenden (z.B. fünf- oder achtadrigen) Kommunikationskabels 11' (in Figur 1 nur strichliert angedeutet) direkt oder mittelbar mit einem beispielsweise in einer Basisstation integrierten Steuergerät, allgemein mit einem sogenannten Primary, verbunden ist. Die Funktion eines sogenannten Primary kann aber auch in Teilen einer Basisstation, wie z.B. in einer abgesetzten Einheit, wie einem Remote Radio Head, der auch kurz als RRH bezeichnet wird, integriert sein. Als Kommunikationsschnittstelle kann also (ähnlich wie beim Stand der Technik auch) beispielsweise ein AISG-Stecker- oder Steckverbinder dienen. Das erwähnte Primary, also allgemein die Basisstation oder beispielsweise ein in der Basisstation integriertes und nicht näher dargestelltes Steuergerät, kann über ein geeignetes Protokoll, beispielsweise ein AISG2.0/3GPP-Protokoll mit der erwähnten Multi-Strahlform-Steuerungseinrichtung M-RET (device-type 0x11) kommunizieren. Der AISG2.0/3GPP-Standard spezifiziert u.a. den "device-type 0x11". Findet die Kommunikation beispielsweise über das AISG1.1 Protokoll statt, so wird die M-RET auf einen oder mehrere Single-RET-Aktuatoren (device-type 0x01) abgebildet, da der Gerätetyp 0x11 in diesem Standard nicht definiert wurde. Diese erwähnte Kommunikationsschnittstelle 13 zum Anschluss eines Primary wird nachfolgend auch kurz als primäre Kommunikationsschnittstelle 13 bezeichnet.

Wie erwähnt handelt es sich also bei dem vorstehend erwähnten so genannten "Primary" um ein in eine Basisstation integriertes Steuergerät. Es wird von daher anstelle der Kurzfassung "Primary" zumindest teilweise auch der vollständige Begriff "Primary-Gerät" oder "Primary Controller" oder "Primary Station" verwendet, also jener Begriff, wie er in der eingangs erwähnten 3GPP-Spezifikation (3GPP TS 25.461 V7.2.0 (2005-12) Technical Specification) und in der AISG 1.1-Spezifikation (Antenna Interface Standards Group Standard No. AISG1: Issue 1.1 vom 30 Juli 2004) verwendet wird.

Aus Figur 1a ist auch schematisch zu ersehen, dass die Multi-Strahlform-Steuerungseinrichtung unter anderem eine Elektronik 20 beispielsweise mit einer Platine PCB, eine Blitzschutzeinrichtung 17, eine Spannungsversorgungseinrichtung 19 (welche teilweise nachfolgend auch als internes Netzteil 19' bezeichnet wird), eine Mikroprozessoreinrichtung 21 mit zugehörigen Motortreibern sowie eine Steuerungseinrichtung 22, z.B. mit einem elektrischen Aktuator 23 (beispielsweise in Form eines Elektromotors, eines Schrittmotors, einer magnetisch betätigbaren Verstelleinrichtung etc.) umfasst, der mit einem zugehörigen Schalt- und Übersetzungsgetriebe 23' mit nicht näher gezeigten mechanischen Schnittstellen- und/oder Kupplungsanordnungen in Verbindung steht, an die ebenfalls nicht näher gezeigte Kupplungsanordnung angreifen können, worüber über nachfolgende Übertragungseinrichtungen innerhalb des Antennengehäuses 1 beispielsweise Phasenschieber angesteuert werden, um einen Absenkwinkel der Strahlereinrichtung unterschiedlich einstellen zu können. Ebenso können andere der Strahlformung dienende Komponenten hierüber angesteuert werden.

Vor allem aber ist die Strahlform-Steuerungseinrichtung RET mit einer Lese- und Schreibelektronik 25 einschließlich einer zugehörigen RFID-Empfangs- und RFID-Sendeantenne 25' ausgestattet, worüber das Auslesen von Informationen von einem RFID-Tag und ggf. auch das Übertragen und Abspeichern von neuen Informationen auf einem RFID-Tag möglich ist. Von daher ist die RET-Einheit RET bzw. die Multi-RET-Einheit M-RET zumindest mit einer Leseelektronik mit zugehöriger Empfangsantenne ausgestattet, wobei diese Elektronik bevorzugt auch als Schreibelektronik ausgebildet ist, sofern nicht eine separate Schreibelektronik vorgesehen ist, und wobei ferner die Empfangsantenne 25' vorzugsweise gleichzeitig auch als RFID-Sendeantenne 25' dient. Andernfalls würde die RET-Einheit bevorzugt eine separate RFID-Sendeantenne 25' zusätzlich umfassen.

Bei dem gezeigten Ausführungsbeispiel weist die Strahlformeinrichtung RET bzw. M-RET eine Öffnung 27 in ihrem Gehäuse 29 in ihrer Anbau- und Anschlussseite 61 (mit welcher sie an der Antenne bzw. dem Radom der Antenne oder hier dem möglicherweise vorgesehenen Antennenflansch 5 angebaut wird) auf, was den Vorteil aufbringt, dass die so gebildete Strahlform-Steuerungseinrichtung RET mit ihrem Gehäuse außerhalb der Antenne 1 beispielsweise an dem erwähnten Montageflansch 5 (der in der Regel bei montierter Antenne untenliegend vorgesehen ist), montiert werden kann, um in bekannter Weise über die Steuerungseinrichtung 22 mit dem integrierten Elektromotor 23 und gegebenenfalls die Getriebeanordnung 23' die im Antennengehäuse 3 vorgesehene Übertragungs- und Verstelleinrichtung und die Phasenschieber so zu verstellen, dass zielgerichtet ein unterschiedlicher Abstrahlwinkel oder andere der Strahlformung dienende Elemente eingestellt werden können. Im angebauten Zustand greift dabei der an der Antenne vorgesehene bzw. angesteckte RFID-Tag 9 bevorzugt über die Öffnungen 27 in dem Gehäuse 29 der RET-Einheit ein, kommt somit also unmittelbar benachbart zur Empfangs- und Sendeantenne 25' zu liegen. In diesem Falle ist also die RET-Einheit mit ihrer Anbau- und Anschlussseite 61 (an welcher das Getriebe 23' vorgesehen ist) an der Außenseite des Antennengehäuses 3 montiert und angeschlossen, vorzugsweise an einem an dem Antennengehäuse 3 untenliegenden Flansch 5, an welchem auch andere mechanische und elektrische Schnittstellen ausgebildet sind.

Im Rahmen der Erfindung können RFID-Tags 9 verwendet werden, die beispielsweise über keinen eigenen Energiespeicher verfügen. Zur Energieversorgung könnten die RFID-Tags an einer entsprechenden Schnittstelle am Antennengehäuse nicht nur mechanisch gehalten, sondern auch elektrisch so angeschlossen sein, dass ihr integrierter Chip mit Energie versorgt wird, insbesondere auch, um die entsprechend abgespeicherten Daten dauerhauft abgespeichert zu halten. Möglichst aber genauso, dass der erwähnte RFID-Tag 9 nur mechanisch an der Antenne oder im Bereich der Antenne, an der Außenseite des Antennengehäuses oder im Inneren des Antennengehäuses, (wie nachfolgend noch gezeigt wird) positioniert wird, und dass der Tag seine Energie zum Auslesen oder auch zum Speichern von neuen Informationen von der RFID-Empfangs- und/oder Sendeantenne 25' erhält. Das heißt durch das von der Empfangs- und/oder Sendeantenne 25' ausgesendete Signal wird so viel Energie übertragen, die ausreicht, dass der RFID-Tag bei erfolgter Abfrage die abgespeicherten Daten wiedergeben, d.h. aus seinem internen Speicher lesen und senden kann.

Bevorzugt kann darüber ein Lese-, jedoch aber auch ein Schreibvorgang zwischen der RET-Einheit und dem an oder in der Antenne 1 angebrachten RFID-Speicher 9, das heißt dem RFID-Tag 9, abgewickelt werden. Grundsätzlich dient die Antenne 25' in der RET-Einheit nicht nur als Empfangsantenne, sondern auch als Sendeantenne. Eine separate Sendeantenne ist in der Regel nicht notwendig. In dem Falle können auch Informationen an den RFID-Tag 9 übermittelt und dort abgespeichert werden, worauf später nochmals eingegangen wird.

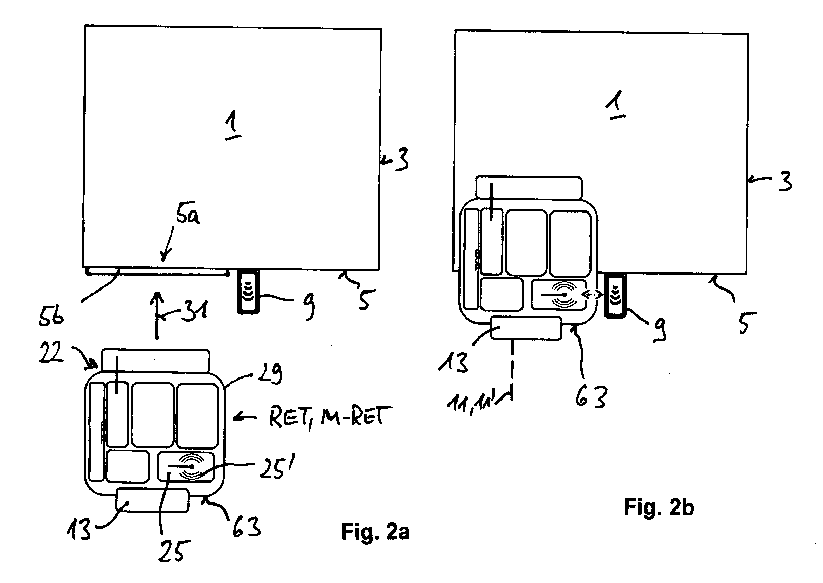

Bei dem Ausführungsbeispiel gemäß den Figuren 2a und 2b ist die Ausbildung derart, dass beispielsweise an dem Antennengehäuse 3 und vorzugsweise an dem Montageflansch 5 eine mittels eines Deckels 5b verschließbare Öffnung 5a vorgesehen ist, beispielsweise in Form eines abnehmbaren oder abschraubbaren Gehäusedeckels, der es erlaubt, die RET-Einheit in einer Teillänge (bzw. Keilhöhe) in das Antennengehäuse einzuführen und dort funktionsrichtig zu positionieren, wobei in diesem Falle die in der RET-Einheit vorgesehene RFID-Empfangsantenne 25' vorzugsweise in Form der RFID-Empfangs- und Sendeantenne 25' entgegengesetzt zur Einsteckrichtung 31, vorzugsweise benachbart zur Anschlussseite 63, innerhalb des RET-Gehäuses 29 positioniert ist. Auch in diesem Falle kommt die so gebildete Empfangs- oder Empfangs- und Sendeantenne 25' unmittelbar in dem an der Außen- bzw. Unterseite 63, d.h. der Kommunikations-Anschlussseite 63 des Antennengehäuses 3 montierten RFID-Tags zu liegen, um eine optimale Kommunikation zwischen Empfangs- und Sendeantenne 25' und RFID-Tag 9 zu gewährleisten.

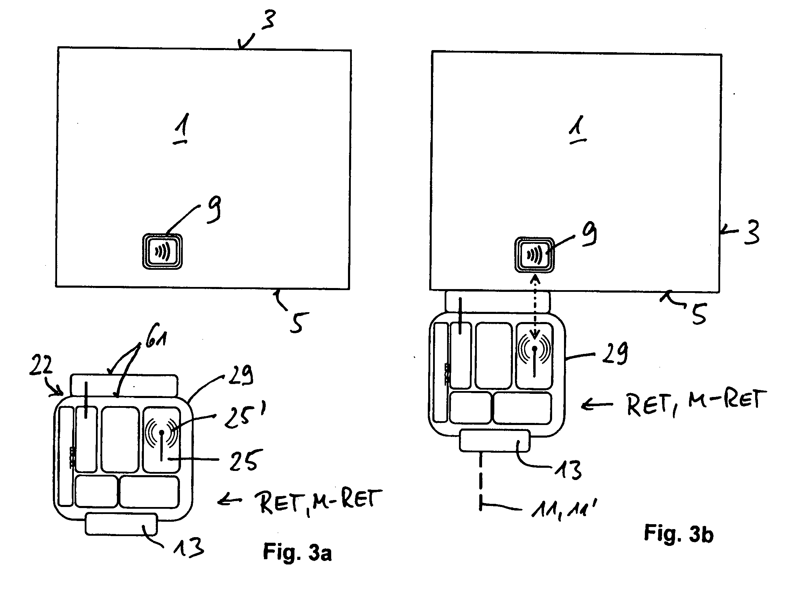

Bei der Ausführungsvariante gemäß den Figuren 3a und 3b erfolgt der Anbau der RET-Einheit an der Antenne 1 ähnlich wie bei dem Ausführungsbeispiel in Figur 1, wobei abweichend zum Ausführungsbeispiel gemäß Figur 1 nunmehr das RFID-Tag 9 innerhalb des Antennengehäuses 3 untergebracht ist, bevorzugt unmittelbar benachbart zum Antennenflansch 5 an dem Gehäuse 3. Gegebenenfalls ist hier eine Öffnung für die Kommunikation mit dem Tag im Gehäuse 29 der RET-oder M-RET-Einheit vorgesehen oder eine dort vorgesehene Öffnung ist mit einer für die Sende- und Empfangsstrahlung zwischen RFID-Empfangs- und Sendeantenne 25' und dem RFID-Tag 9 durchlässigen Abdeckung verschlossen.

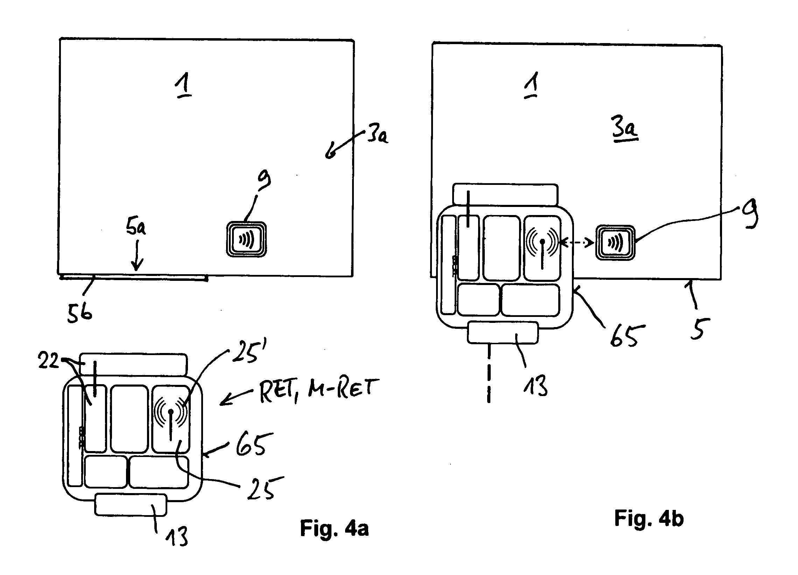

Bei einem Ausführungsbeispiel gemäß den Figuren 4a und 4b ist im Unterschied zum Ausführungsbeispiel nach den Figuren 3a und 3b vorgesehen, dass die RET- und insbesondere die Multi-RET-Einheit nicht völlig außerhalb des Antennengehäuses, vorzugsweise an dessen Unterseite, sondern in einer Teilhöhe bzw. Teillänge in das Innere 3a des Antennengehäuses 3 eingreift und montiert wird. Dazu wird wieder der Deckel 5b im Bereich des Flansches 5 entfernt und das Gehäuse 29 der Multi-RET-Einheit in der Öffnung 5a des Antennengehäuses 3 in einer Teilhöhe eingeschoben. In diesem Falle ist die RFID-Empfangs- und Sendeantenne 25' ebenfalls wieder unmittelbar benachbart zu dem in der Antenne untergebrachten RFID-Tag 9 positioniert, im gezeigten Ausführungsbeispiel benachbart zu einer Seitenwand 65 im Gehäuse 29 der RET bzw. Multi-RET-Einheit.

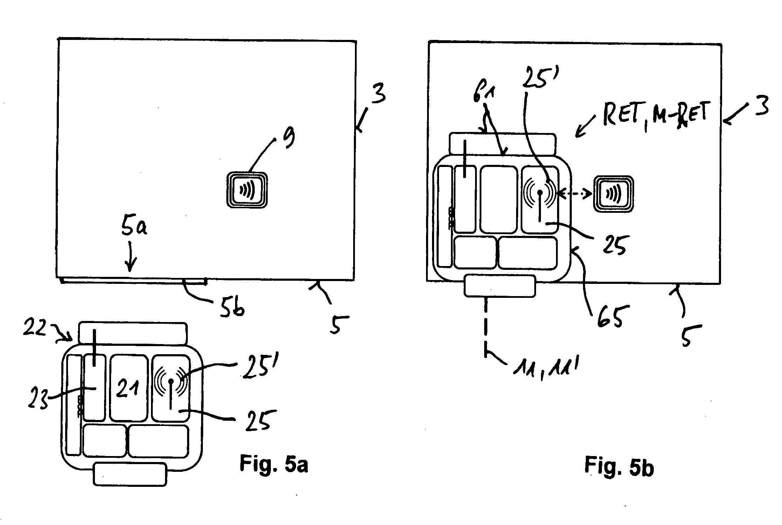

Schließlich wird noch auf eine Abwandlung gemäß den Figuren 5a und 5b verwiesen, bei der nunmehr die RET- und insbesondere die Multi-RET-Einheit über eine am Antennengehäuse, vorzugsweise am Antennenflansch, vorgesehene Öffnung 5a nach Entfernung des Deckels 5b völlig in das Innere 3a des Antennengehäuses 3 einführbar und darüber anschließbar ist, so dass mehr oder weniger nur noch die unten befindliche Anschluss- oder Schnittstelle 13 der RET-Einheit von außen her zugänglich ist. Auch hier ist die RFID-Empfangs- und Sendeantenne 25' unmittelbar benachbart zu dem in der Antenne 1 untergebrachten RFID-Tag 9 angeordnet, und zwar hier wiederum vor allem benachbart zur Seitenwand 65, möglicherweise auch im Übergang von der Seitenwand 65 zu der oben liegenden Anschlussfläche 61.

Aus den erläuterten Ausführungsbeispielen ergibt sich, dass die Lese- und Schreibelektronik 25 und insbesondere die RFID-Empfangs- und/oder Sendeantenne 25' bevorzugt unmittelbar benachbart beispielsweise zur Anbau- oder Anschlussseite 61 oder gegenüberliegend benachbart zur Kommuniktions-Anschlussseite 65 oder an einer Seitenwand 63 im Gehäuse 29 der RET- oder Multi-RET-Einheit untergebracht ist, wobei diese Seitenwand 63 bevorzugt in Einbau-oder Einsteckrichtung 31 verläuft, aber nicht verlaufen muss. Wenn die Empfangs- und/oder Sendeantenne 25' innerhalb des Gehäuses 29 der RET- oder Multi-RET-Einheit untergebracht ist, beispielsweise an einer Innenwandung des Gehäuses, muss das Gehäuse aus elektromagnetisch durchlässigem Material bestehen, zumindest für die RFID-Sende- und Empfangsfrequenz. Ebenso kann aber zumindest die Empfangs- und/oder Sendeantenne 25' auch an der Außenseite des Gehäuses 29 der RET- oder Multi-RET-Einheit positioniert sein, insbesondere wenn die Antenne mit einer elektromagnetisch durchlässigen Schutzschicht überzogen ist, die sie auch vor Umwelteinflüssen schützt.

Auf dem erwähnten RFID-Tag können alle spezifischen und relevanten Daten bezüglich der Antenne und/oder der Ansteuerung der Antenne und/oder für die Kommunikation mit den Elementen für die Strahlform-Steuerungseinrichtung in der Antenne und/oder aber auch die bezüglich des laufenden Betriebs umfassten Betriebsdaten oder Einstellwerte von Hause aus abgespeichert oder während des Betriebs zusätzlich abgespeichert und bei Bedarf jederzeit ausgelesen werden.

Vor allem sind auf dem RFID-Tag die Daten bezüglich des verwendeten Antennentyps wie aber auch die frequenzbandspezifischen Daten dauerhaft abgespeichert. Somit scheidet eine Verwechslung der spezifischen Konfigurations-Daten und Konfigurations-Werten aus, wie sie für die Kommunikation und Steuerung einer angeschlossenen oder angebauten RET-Einheit und dem antennen-spezifischen Aufbau notwendig sind. Dies gilt auch für die sogenannten zusätzlichen Daten und Werte (additional-data). Bei der Installation eines RET-Systems kann somit eine Verwechslung zwischen der RET und den antennen-spezifischen Konfigurationsdaten und -werten einschließlich den zusätzlichen Daten und Werten ausgeschlossen werden.

Zudem können die einzelnen Frequenzbänder den einzelnen RET-Untereinheiten (den sog. RET-Sub-Einheiten) eindeutig zugeordnet werden. Eine Multi-Strahlform-Steuerungseinrichtung in Form einer sogenannte Multi-RET besteht nämlich aus mehreren Unter- oder sogenannten Sub-Einheiten, die sogenannte virtuelle RET-Einheiten bilden.

Zudem kann - wie erwähnt - ein derartiges RFID-Tag 9 als Datenspeicher zum Beispiel für während des Betriebs erzeugte Daten benutzt werden. Somit können also Betriebsparameter wie Absenk-Strahlwinkel (Downtilt-Winkel), Extrem-Temperaturen, Verstellzyklen, Beschleunigung etc. abgelegt werden. Das RFID-Tag fungiert somit als Logbuch der Antenne und kann bei Bedarf ausgelesen werden.

Soll eine RET-Einheit ersetzt werden, kann die neu angebaute RET- oder Multi-RET-Einheit die auf dem RFID-Tag 9 abgespeicherten Betriebsparameter aus dem RFID-Datenträger neben den antennenspezifischen Daten auslesen und ist somit sofort wieder betriebsbereit.

Die erwähnte RFID-Technologie reduziert somit die Ausfallzeit des Systems auf eine Minimum.

Insbesondere die Kombination des erwähnten RFID-Tags 9, der Antenne 1, insbesondere in Form der Mobilfunk-Antenne 1, und der Strahlform- bzw. Multi-Strahlform-Steuerungseinrichtung (in Form der RET- bzw. Multi-RET-Einheit) bilden ein System, dessen Konfiguration beispielsweise in Form des eingestellten Downtilt-Winkels je Band, der Zuordnung der einzelnen Frequenzbänder zu den gegebenenfalls mehreren Netzbetreibern/Primaries, (welche sich eine Antenne teilen etc.) in dem erwähnten RFID-Tag 9 abgelegt und bei Bedarf jederzeit wieder von diesem abgefragt und damit ausgelesen werden kann.

Bevorzugt kann dabei jedes im Bereich einer Antenne 1 positionierte RFID-Tag 9 eine weltweit eindeutige, auslesbare Seriennummer, eine sogenannte individuelle und nicht mehrfach vorkommende Identifikationsnummer RFID aufweisen, welche unter anderem auch dazu genutzt werden kann, eventuelle Produktpiraterie zu erschweren.

Zusammenfassend kann also festgehalten werden, dass der erläuterte RFID-Tag in oder an der Antenne verbaut werden bzw. angeschlossen werden kann, wobei die erwähnte RET- und insbesondere die sogenannte Multi-RET-Einheit teilweise oder vollständig in der Antenne eingebracht und angeschlossen oder an der Antenne außerhalb montiert werden kann.

In der erwähnten RET-Einheit befindet sich dabei die zum Auslesen und vorzugsweise zusätzlich zum Beschreiben des verbauten Tags geeignete Leseelektronik und vorzugweise auch eine Schreibelektronik, welche auch die erwähnte Sende- und auch die Empfangsantenne vorzugsweise in einer als Sende- und Empfangsantenne fungierenden Antenne beinhaltet. Bevorzugt ist lediglich darauf zu achten, dass bei allen Varianten die Montage der RET- und insbesondere der Multi-RET-Einheit so erfolgt, dass die in der Strahlform-Steuerungseinrichtung integrierte Leseelektronik, d.h. insbesondere die integrierte Empfangsantenne und vorzugsweise die Empfangs- und Sendeantenne so in Relation zum RFID-Tag positioniert ist, dass eine bi-direktionale Kommunikation zwischen der Strahlform-Steuerungseinrichtung RET bzw. Multi-RET und dem an oder in der Antenne angebrachten angeschlossenen RFID-Tag ermöglicht wird.

Die Tags und die zugehörige RFID-Antenne können in allen grundsätzlich geeigneten Frequenzbereichen arbeiten, insbesondere können Tags verwendet werden, die beispielsweise bevorzugt bei 13,56 MHz arbeiten. Es können aber ebenso auch Tags in Kombination mit der Schreib-Leseelektronik verwendet werden, welche bei völlig anderen Frequenzen arbeiten. Einschränkungen bestehen insoweit nicht.

## Patentansprüche

1. Antenne, insbesondere Mobilfunkantenne, mit folgenden Merkmalen
- in einem Antennengehäuse (3) sind mehrere Strahlereinrichtungen untergebracht,
- es ist eine Strahlform-Steuerungseinrichtung (RET, M-RET) an der Antenne (1) angeschlossen, die einen Mikroprozessor (21) und eine Steuerungseinrichtung (22) zur Durchführung einer Strahlformung umfasst,
- an der Antenne (1) ist ein RFID-Tag (9) vorgesehen,
**gekennzeichnet durch** die folgenden weiteren Merkmale
- die Strahlform-Steuerungseinrichtung (RET, M-RET) umfasst eine Leseelektronik (25) mit einer RFID-Empfangsantenne (25') und/oder eine Schreibelektronik (25) mit einer RFID-Sendeantenne (25'),
- der an der Antenne (1) vorgesehene RFID-Tag (9) ist im Empfangs- und/oder Sendebereich der Empfangs- und/oder Sendeantenne (25') angeordnet,
- über die RFID-Empfangsantenne (25') ist eine uni-direktionale Kommunikation oder über die RFID-Empfangs- und Sendeantenne (25') ist eine bi-direktionale Kommunikation abwickelbar, und
- auf dem RFID-Tag (9) sind Konfigurationsdaten der Antenne (1) und/oder Betriebsdaten der Antenne (1) und/oder Daten für den Betrieb der an der Antenne (1) anzuschließenden Strahlform-Steuerungseinrichtung (RET, M-RET) abgespeichert.

2. Antenne nach Anspruch 1, **dadurch gekennzeichnet, dass** die RFID-Empfangs- oder die RFID-Empfangs- und Sendeantenne (25') im Gehäuse (29) oder auf der Außenseite des Gehäuses (29) der Strahlform-Steuerungseinrichtung (RET, M-RET) vorgesehen ist.

3. Antenne nach Anspruch 1 oder 2, **dadurch gekennzeichnet, dass** die RFID-Empfangs- oder die RFID-Empfangs- und Sendeantenne (25') innerhalb oder außerhalb des Gehäuses (29) der Strahlform-Steuerungseinrichtung (RET, M-RET) an einer oder benachbart zu einer Anbau- und Anschlussseite (61) positioniert ist.

4. Antenne nach Anspruch 1 oder 2, **dadurch gekennzeichnet, dass** die RFID-Empfangs- oder die RFID-Empfangs- und Sendeantenne (25') innerhalb oder außerhalb des Gehäuses (29) der Strahlform-Steuerungseinrichtung (RET, M-RET) an oder benachbart zu der Kommunikations-Anschlussseite (63) positioniert ist, die gegenüberliegend zu der Anbau- oder Anschlussseite (61) am Gehäuse (29) der Strahlform-Steuerungseinrichtung (RET, M-RET) vorgesehen ist.

5. Antenne nach Anspruch 1 oder 2, **dadurch gekennzeichnet, dass** die RFID-Empfangs- oder RFID-Empfangs- und Sendeantenne (25') innerhalb oder außerhalb des Gehäuses (29) der Strahlform-Steuerungseinrichtung (RET, M-RET) an oder benachbart zu einer Seitenwand (65) positioniert ist, die zwischen der Anbau- und Anschlussseite (61) und der dazu gegenüberliegend vorgesehenen Kommunikations-Anschlussseite (63) verläuft.

6. Antenne nach einem der Ansprüche 1 bis 5, **dadurch gekennzeichnet, dass** das Antennengehäuse (3) eine Anschluss- und Schnittstellenseite (5) aufweist, und der RFID-Tag (9) auf dieser Anschluss- und Schnittstellenseite (5) des Antennengehäuses (3) positioniert ist.

7. Antenne nach einem der Ansprüche 1 bis 6, **dadurch gekennzeichnet, dass** auf dem RFID-Tag (9) antennentyp-spezifische und /oder frequenzband-spezifische Daten, in denen die Antenne betrieben wird, gespeichert oder dauerhaft abgespeichert sind.

8. Antenne nach einem der Ansprüche 1 bis 7, **dadurch gekennzeichnet, dass** auf dem RFID-Tag (9) antennen-spezifische Konfigurationsdaten sowie antennen-spezifische Zusatz-Betriebsdaten dauerhaft abgespeichert sind.

9. Antenne nach einem der Ansprüche 1 bis 8, **dadurch gekennzeichnet, dass** auf dem RFID-Tag (9) nach Art eines Logbuchs Daten bezüglich Betriebsparameter abspeicherbar sind.

10. Antenne nach Anspruch 9, **dadurch gekennzeichnet, dass** auf dem RFID-Tag (9) Betriebsparameter und/oder Einstellwerte bezüglich eines Downtilt-Winkels, bezüglich des Temperaturverlaufes und/oder der Extremtemperaturen, bezüglich Verstellzyklen, bezüglich stattgefundener Beschleunigungen abspeicherbar bzw. abgespeichert sind.

## Claims

1. Antenna, more particularly a mobile communications antenna, comprising the following features:
- a plurality of antenna devices are housed in an antenna housing (3),
- a beam-shape control device (RET, M-RET) is connected to the antenna (1) and comprises a microprocessor (21) and a control device (22) for carrying out beam shaping,
- an RFID tag (9) is provided on the antenna (1),
**characterised by** the following additional features:
- the beam-shape control device (RET, M-RET) comprises a read electronics unit (25) comprising an RFID receiver antenna (25') and/or a write electronics unit (25) comprising an RFID transmitter antenna (25'),
- the RFID tag (9) provided on the antenna (1) is arranged in the receiving and/or transmitting region of the receiver and/or transmitter antenna (25'),
- unidirectional communication can be handled via the RFID receiver antenna (25'), or bidirectional communication can be handled via the RFID transceiver antenna (25'), and
- configuration data for the antenna (1) and/or operating data for the antenna (1) and/or data for operating the beam-shape control device (RET, M-RET) to be connected to the antenna (1) are stored on the RFID tag (9).

2. Antenna according to claim 1, **characterised in that** the RFID receiver antenna or the RFID transceiver antenna (25') is provided in the housing (29) or on the outside of the housing (29) of the beam-shape control device (RET, M-RET).

3. Antenna according to either claim 1 or claim 2, **characterised in that** the RFID receiver antenna or the RFID transceiver antenna (25') is positioned on or adjacent to an attachment or connection side (61), inside or outside the housing (29) of the beam-shape control device (RET, M-RET).

4. Antenna according to either claim 1 or claim 2, **characterised in that** the RFID receiver antenna or the RFID transceiver antenna (25') is positioned on or adjacent to the communication connection side (63), inside or outside the housing (29) of the beam-shape control device (RET, M-RET), which communication connection side is provided opposite the attachment or connection side (61) on the housing (29) of the beam-shape control device (RET, M-RET).

5. Antenna according to either claim 1 or claim 2, **characterised in that** the RFID receiver antenna or the RFID transceiver antenna (25') is positioned on or adjacent to a side wall (65), inside or outside the housing (29) of the beam-shape control device (RET, M-RET), which side wall extends between the attachment and connection side (61) and the communication connection side (63) provided opposite thereto.

6. Antenna according to any of claims 1 to 5, **characterised in that** the antenna housing (3) comprises a connection and interface side (5), and the RFID tag (9) is positioned on this connection and interface side (5) of the antenna housing (3).

7. Antenna according to any of claims 1 to 6, **characterised in that** antenna-type-specific and/or frequency-band-specific data, in which bands the antenna is operated, are stored or permanently stored on the RFID tag (9).

8. Antenna according to any of claims 1 to 7, **characterised in that** antenna-specific configuration data and antenna-specific supplementary operating data are permanently stored on the RFID tag (9).

9. Antenna according to any of claims 1 to 8, **characterised in that** data relating to operating parameters can be stored on the RFID tag (9) in the manner of a log book.

10. Antenna according to claim 9, **characterised in that** operating parameters and/or settings relating to a down-tilt angle, relating to the temperature change and/or to extreme temperatures, relating to adjustment cycles and relating to accelerations which have occurred can be stored or are stored on the RFID tag (9).

## Revendications

1. Antenne, plus particulièrement antenne radio mobile, **caractérisée en ce que**
- plusieurs dispositifs émetteurs sont placés dans un boîtier d'antenne (3),
- un dispositif de commande en forme de faisceau (RET, M-RET) est relié à l'antenne (1), lequel comprend un microprocesseur (21) et un dispositif de commande (22) pour générer un faisceau,
- une balise RFID (9) est prévue au niveau de l'antenne (1),
caractérisée également **en ce que**
- le dispositif de commande en forme de faisceau (RET, M-RET) comprend un système électronique de lecture (25) avec une antenne de réception RFID (25') et/ou un système électronique d'écriture (25) avec une antenne émettrice RFID (25'),
- la balise RFID (9) prévue au niveau de l'antenne (1) est disposée dans une zone d'émission et/ou de réception de l'antenne de réception et/ou émettrice (25'),
- une communication unidirectionnelle peut être générée via l'antenne de réception RFID (25') ou une communication bidirectionnelle peut être générée via l'antenne de réception et émettrice RFID (25'), et
- des données de configuration de l'antenne (1) et/ou des données d'exploitation de l'antenne (1) et/ou des données pour l'exploitation du dispositif de commande en forme de faisceau (RET, M-RET) connecté à l'antenne sont enregistrées sur la balise RFID (9).

2. Antenne selon la revendication 1, **caractérisée en ce que** l'antenne de réception RFID ou l'antenne de réception RFID et émettrice (25') est prévue dans un boîtier (29) ou sur le côté extérieur du boîtier (29) du dispositif de commande en forme de faisceau (RET, M-RET).

3. Antenne selon la revendication 1 ou 2, **caractérisée en ce que** l'antenne de réception RFID ou l'antenne de réception RFID et émettrice (25') est positionnée à l'intérieur ou à l'extérieur du boîtier (29) du dispositif de commande en forme de faisceau (RET, M-RET) au niveau ou en regard d'un côté de montage et de raccordement (61).

4. Antenne selon la revendication 1 ou 2, **caractérisée en ce que** l'antenne de réception RFID ou l'antenne de réception et émettrice (25') est positionnée à l'intérieur ou à l'extérieur du boîtier (29) du dispositif de commande en forme de faisceau (RET, M-RET) au niveau ou en regard du côté de raccordement de communication (63), qui est prévu à l'opposé du côté de montage ou de raccordement (61) au niveau du boîtier (29) du dispositif de commande en forme de faisceau (RET, M-RET).

5. Antenne selon la revendication 1 ou 2, **caractérisée en ce que** l'antenne de réception RFID ou l'antenne de réception RFID et émettrice (25') est positionnée à l'intérieur ou à l'extérieur du boîtier (29) du dispositif de commande en forme de faisceau (RET, M-RET) au niveau ou en regard d'une paroi latérale (65), qui est située entre le côté de montage et de raccordement (61) et le côté de raccordement de communication (63) prévu à l'opposé de celui-ci.

6. Antenne selon l'une quelconque des revendications 1 à 5, **caractérisée en ce que** le boîtier d'antenne (3) comporte un côté de raccordement et d'interface (5), et **en ce que** la balise RFID (9) est positionnée sur ce côté de raccordement et d'interface (5) du boîtier d'antenne (3).

7. Antenne selon l'une quelconque des revendications 1 à 6, **caractérisée en ce que** des données spécifiques au type d'antenne et/ou spécifiques à la bande de fréquence de l'antenne sont enregistrées sur la balise RFID (9).

8. Antenne selon l'une quelconque des revendications 1 à 7, **caractérisée en ce que** des données de configuration spécifiques à l'antenne ainsi que des données d'exploitation supplémentaires spécifiques à l'antenne sont enregistrées de façon durable sur la balise RFID (9).

9. Antenne selon l'une quelconque des revendications 1 à 8, **caractérisée en ce que** des données relatives aux paramètres d'exploitation peuvent être enregistrées sur la balise RFID (9) en fonction du type de journal.

10. Antenne selon la revendication 9, **caractérisée en ce que** des paramètres d'exploitation et/ou des valeurs de réglage relatifs à un angle d'inclinaison vers le bas, à la courbe de températures et/ou aux accélérations qui ont eu lieu peuvent être ou sont enregistrés sur la balise RFID (9).
